# EUROPÄISCHE PATENTSCHRIFT

(11) **EP 1 755 427 B1**
(45) Veröffentlichungstag und Bekanntmachung des Hinweises auf die Patenterteilung: **05.11.2008**
(21) Anmeldenummer: 05744999.3
(22) Anmeldetag: 03.06.2005
(51) Int. Cl.: A47J 31/40, G07F 9/00, G07F 13/00, B67D 1/00

(54) **VERFAHREN UND VORRICHTUNG ZUR HERSTELLUNG EINES GETRÄNKES**
METHOD AND DEVICE FOR PRODUCING A BEVERAGE
PROCEDE ET DISPOSITIF POUR PRODUIRE UNE BOISSON

(30) Priorität: 04.06.2004 CH 937042004
(43) Veröffentlichungstag der Anmeldung: 28.02.2007
(73) Patentinhaber: Petervin S.A., L-1233 Luxembourg (LU)
(72) Erfinder: KLANT, Keesjan, CH-9053 Teufen (CH); AMIEL, Richard, CH-9442 Berneck (CH)
(74) Vertreter: Walder, Martin Bernhard
(86) Internationale Anmeldenummer: PCT/CH2005/000312
(87) Internationale Veröffentlichungsnummer: WO 2005/117669

(56) Entgegenhaltungen:
- WO-A-99/02081
- WO-A-20/04004522
- PATENT ABSTRACTS OF JAPAN Bd. 010, Nr. 310 (C-379), 22. Oktober 1986 (1986-10-22) & JP 61 119141 A (TOSHIBA ELECTRIC APPLIANCE CO LTD), 6. Juni 1986 (1986-06-06)

## Beschreibung

Die Erfindung betrifft ein Verfahren und eine Vorrichtung zur Herstellung einer einzelnen Genussmenge eines trinkfertigen Getränks gemäss den Oberbegriffen der unabhängigen Ansprüche, insbesondere zur Herstellung von genussfertigem, heissen Kaffee oder Tee.

Der erstmals im Orient durch Brühen von gerösteten und gemahlenen Kaffeebohnen hergestellte Kaffee trat seit seiner Entdeckung einen unvergleichlichen Siegeszug um die ganze Welt an.

Kaffee ist ein Extrakt aus der gerösteten Kaffeebohne. Der Extrakt umfasst wasserlösliche Anteile und Feststoffanteile, und insbesondere im modernen Espresso auch Öle und Fette aus der Kaffeebohne, welche im Wasser emulgiert werden. Alle diese Stoffe zusammen bestimmen den Geschmack und den Duft des Kaffees. Etwa 25 Volumenprozent des Kaffeemahlguts gelangen durch die Extraktion in die Tasse Kaffee. Der Kaffeesatz hingegen ist in der Kaffeetasse unerwünscht. Vielmehr wird zur Vermeidung einer negativen Aromaentwicklung und zur Vermeidung von sehr hohen Anteilen an Koffein eine rasche Trennung des Kaffeesatzes vom Extrakt angestrebt.

Es entwickelten sich im Wesentlichen drei Zubereitungsarten von kaffeesatzfreiem Kaffee:
- Gemäss einer ersten Zubereitungsart wird das Mahlgut im Wasser gebrüht und der Extrakt mittels der Schwerkraft durch Filter und Siebe getrieben und so der Kaffeesatz vom Getränk getrennt. Diese Linie besteht heute weiter bei der Herstellung von sogenanntem Filterkaffee. Die Kaffeequalität hängt hier insbesondere ab von der Brühzeit (beim Filterkaffee abhängig unter anderem von der Durchlässigkeit des Filters und der Feinheit des Mahlguts) und der Hitze des Wassers.
- Gemäss einer zweiten Zubereitungsart wird das Wasser mittels eines niedrigen Dampfdrucks durch das Mahlgut getrieben. Ein Repräsentant dieser Linie ist der Perkolator. Dieses Verfahren ergibt einen herben Kaffee, da das Wasser überhitzt sein muss, um den benötigten Dampfdruck zu entwickeln.
- Gemäss einer dritten Zubereitungsart wird das Wasser mittels mechanischen Druckmitteln durch das Mahlgut getrieben. Dies erlaubt den Druck und die Temperatur des Wassers unabhängig voneinander zu regeln. Mit diesem Verfahren wird ein sogenannter Espresso hergestellt. Dabei werden Drucke von bis zu 18 bar aufgebracht. Typisch für den Espresso ist unter anderem das begehrte Schäumchen, die sogenannte "Crema".

Mit der elektrischen Versorgung kamen Ende des 19. Jahrhunderts elektrisch beheizte Kaffeemaschinen und anfangs des 20. Jahrhunderts Kaffeemaschinen mit elektrischer Pumpe zum Druckaufbau im Wasser auf. Die Herstellungsverfahren für den kaffeesatzfreien Kaffee mit den bekannten Kaffeemaschinen sind jedoch bis heute einteilbar in die drei oben angeführten Zubereitungsarten.

Praktisch alle Kaffeemaschinen, unabhängig von der jeweiligen Zubereitungsart, arbeiten nach einem Batch-Verfahren. Dies bedeutet, dass eine gewählte Menge gemahlener Kaffee genommen wird, und eine angepasste Menge Wasser dieser gesamten Menge Mahlgut zugegeben wird oder durch das Mahlgut hindurchgetrieben wird. Mit der Wahl der Kaffeemenge und der dazu proportionalen Wassermenge wird deshalb bereits die Genussmenge des herzustellenden Kaffees gewählt. Nach Herstellung dieser Menge Kaffee muss wieder von vorne begonnen werden, sobald mehr Kaffee gewünscht wird. Solche Batch-Verfahren sind sequenziell, d.h. es wird mit einer definierten Menge jeweils eine Sequenz von Schritten nacheinander durchlaufen. Das Verfahren kann lediglich nach Abschluss jeder Sequenz unterbrochen werden. Eine kontinuierliche Herstellung von Kaffee ist mit einem solchen Verfahren daher nicht möglich.

Allen Verfahren gemeinsam ist auch, dass sich die Extraktionsbedingungen während der Extraktion des Mahlgutes kaum verändern. Die eintretenden Veränderungen sind lediglich darauf zurückzuführen, dass das Mahlgut mit fortschreitender Extraktion weniger Volumen und weniger Inhaltstoffe besitzt. Jedoch sind die Extraktionsbedingungen wie Druck, Wassertemperatur, Benetzungszeit etc. bei unterschiedlichen Zubereitungsarten unterschiedlich. Es werden deshalb je nach Zubereitungsart unterschiedliche Anteile des Kaffeemahlguts extrahiert. Daher besitzen die mit den unterschiedlichen Zubereitungsarten hergestellten Kaffees ihre besonderen Eigenschaften. Es eignen sich auch verschiedene Kaffeesorten und Röstungen besonders für einzelne der Zubereitungsarten.

Aus der US 4,134,332 ist eine Kaffeemaschine bekannt, mit welcher Bohnenkaffee in einer wählbaren Anzahl Tassen in einem kontinuierlichen Verfahren hergestellt werden kann. Dieser automatische Getränkekocher ist zum kontinuierlichen Anbrühen eines Getränkes in einer beliebigen, vorgebbaren Menge vorgesehen. Der Kocher umfasst Mittel zur Versorgung eines Mischrohrs mit einer gekörnten Getränkezutat, wie gemahlenem Kaffee, und heissem Wasser. Die Mischung von Wasser und gekörnter Zutat wird während einer für das Anbrühen genügend langen Zeit durch das Mischrohr geführt. Ein Vorschub der Mischung erfolgt dank der Schwerkraft. Ein bewegter Filter quert das Mischrohr, so dass die aus dem Mischrohr fallende Mischung kontinuierlich auf einen frischen Filterbereich gelangt und so eine wirksame Filterung erreicht wird. Der Filter besteht aus einem kontinuierlich bewegten Endlos-Filterband. Während dem das Getränk den Mischkanal durchfliesst wird es auf einer geeigneten, konstanten Temperatur gehalten, da das Mischrohr durch einen Heisswasserbehälter hindurchgeführt ist.

Mit einer Zeitschaltuhr kann die Dauer einer Zugabe von Wasser und gekörnter Getränkezutat zum Mischrohr gesteuert werden. So kann eine Tassenanzahl vorgewählt werden. Während der eingestellten Zeit läuft auch das Filterband. Wasser und Granulat durchlaufen eine gewisse Zeit das Mischrohr. Das verbrauchte Granulat fällt auf das Filterband und wird abtransportiert. Das Getränk durchquert das Filterband, wird darunter in einem Trichter aufgefangen und in eine Tasse geleitet.

Nachteilig an dieser Kaffeemaschine ist, dass ein beträchtlicher Anteil an gemahlenem Kaffee benetzt und geheizt im Mischrohr verbleibt, bis eine nächste Portion Kaffee aus dem Kocher gelassen wird. Dieser Anteil wird viel länger als erwünscht extrahiert. Dadurch wird keine konstante Qualität des Getränkes erreicht.

Die spezifische Ausbildung der Kaffeemaschine bedingt auch, dass nach Beendigung der Zugabe von Wasser zum Mischrohr noch eine gewisse Zeit durch Kapillarkräfte zurückgehaltener Kaffee aus dem Mischrohr tropft. Die Kaffeeherstellung nach diesem kontinuierlichen Verfahren ist praktisch unbekannt geblieben.

Wirtschaftlich hat sich das sequenzielle Batch-Verfahren zur Herstellung von beliebigen Mengen an trinkfertigem Kaffee durchgesetzt. Für viele Kaffeemaschinen, ob für den Haushalt oder die Restauration entwickelt, werden die für jeweils eine einzelne Portion benötigten Mengen an Kaffee bereits portioniert verkauft. Die einzelnen Portionen sind z.B. in einzelnen Aluminiumbehältern oder in Filterkissen eingepackt. Dies bedingt die zeitliche und örtliche Trennung des Mahlprozesses von der Kaffeeherstellung aus dem gemahlenen Kaffee.

Jedenfalls ist bei den herkömmlichen Kaffeemaschinen eine stets ungefähr gleich grosse Menge in einen Filtereinsatz zu geben. Aus dieser stets gleich grossen Portion wird dann mit Wasser eine Tasse Kaffee gewonnen. Wird eine grosse Tasse Kaffee aus der Kaffeemaschine gelassen, so wird die selbe Menge Kaffee benützt wie für eine kleine Tasse Kaffee. Lediglich die Wassermenge wird verändert. Die Art des Kaffees ist daher sehr unterschiedlich, je nach Tassengrösse.

Bei Filterkaffeemaschinen ist die Menge an Kaffee und Wasser wählbar. Die Menge wird der herzustellenden Genussmenge entsprechend gewählt. Die für die gewünschte Anzahl Tassen benötigten Mengen werden abgemessen und in die Maschine gegeben. Die Maschine erhitzt das Wasser und träufelt dieses über das Kaffeegranulat. Auch hier verändert sich die Kaffeequalität abhängig von der Menge des Kaffees, denn bei grösseren Mengen wird das Mahlgut länger extrahiert.

Aus der WO 2004/004522 ist ein Verfahren zur Herstellung einer einzelnen Genussmenge eines trinkfertigen Getränkes durch Extraktion eines feststofflichen Aromaträgers mittels Wasser bekann, bei welchem Verfahren der Aromaträger in Portionenbehältern sukzessive einem Extraktionsbereich zugeführt wird, der Portionenbehältern durch den Extraktionsbereich hindurch bewegt wird und im Extraktionsbereich mit Wasser extrahiert wird. Der Aromaträger bleibt im Portionenbehälter zurück, während der Extrakt in einen Becher ausgegeben wird. Die Vorrichtung weist dabei folgende Merkmale auf:
- Eine Förderbahn zur Aufnahme der Behälter mit den Aromaträgerprotionen,
- einen Zuführungskanal für die Portionenbehälter, welcher in die Förderbahn mündet,
- eine Zuführungsleitung für das Wasser, welche in die Förderbahn mündet, und
- eine Sieb-/ Filtereinrichtung in jedem Portionenbehälter, um den extrahierten Aromaträger vom Extrakt zu trennen,
- wobei die Förderbahn zwischen der Mündung der Zuführungsleitung für Wasser und einer Aufnahme für den Portionenbehälter einen Extraktionsbereich bildet, und eine mechanische Fördereinrichtung vorhanden ist, um den Portionenbehälter zwingend entlang der Förderbahn durch den Extraktionsbereich hindurch zu fördern.

Nachteilig an diesen bekannten Zubereitungsarten ist, dass vor der Herstellung des Kaffees die Menge von Mahlgut und Wasser der Endmenge entsprechend gewählt werden muss. Nachteilig ist auch, dass die Extraktionsqualität nur leidlich beeinflussbar ist, da gewisse Parameter unbeeinflussbar sind.

Es ist Aufgabe der Erfindung, ein Verfahren und eine Vorrichtung zur Herstellung eines trinkfertigen Getränks bereitzustellen. Das Getränk soll durch Extraktion mittels Wasser aus einem Aromaträger hergestellt werden. Das Verfahren soll kontinuierlich erfolgen können. Das Verfahren soll insbesondere auch jederzeit unterbrochen werden und weitergeführt werden können, ohne dass die Getränkequalität darunter leidet. Die Getränkequalität soll auch praktisch unabhängig von der Menge des hergestellten Getränks und von der verstrichenen Zeitspanne seit der letzten Herstellung eines Getränkes sein. Weiter soll das Verfahren bei der Extraktion von Kaffee ermöglichen, den Koffeingehalt gering und den Aromagehalt hoch zu halten.

Erfindungsgemäss wird diese Aufgabe durch ein Herstellungsverfahren gemäss dem Anspruch 1 gelöst, und durch eine Vorrichtung gemäss dem Anspruch 21.

Bei einem solchen Verfahren zur Herstellung einer einzelnen Genussmenge eines trinkfertigen Getränkes durch Extraktion eines feststofflichen Aromaträgers mittels Wasser wird wie in der Kaffeemaschine gemäss der US 4,134,332 der Aromaträger durch einen Extraktionsbereich hindurch bewegt, der sich durch den Extraktionsbereich hindurch bewegende Aromaträger mit Wasser durchsetzt, wobei das Wasser Aromastoffe aus dem Aromaträger-aufnimmt. Anschliessend wird der Aromaträger vom Extrakt getrennt.

Zur Lösung der gestellten Aufgabe wird aber, im Unterschied zu dem bekannten Verfahren, der Aromaträger während seiner Extraktion mit einer Fördereinrichtung durch den Extraktionsbereich hindurch zwangsgefördert. Dies erlaubt zum Beispiel, die Form des Extraktionsbereichs zu gestalten, unterschiedliche Druckverhältnisse an unterschiedlichen Stellen des Extraktionsbereichs zu schaffen, den Wasserdruck an unterschiedlichen Stellen des Extraktionsbereichs unterschiedlich hoch zu halten, an verschiedenen Stellen des Extraktionsbereich unterschiedlichen Temperaturen einzustellen, und überhaupt das Wasser mit Druck durch den im Extraktionsbereich vorliegenden Aromaträger zu pressen.

Wird das Wasser mit Druck durch den Aromaträger gepresst, so erlaubt dies die Berührungszeit zwischen Wasser und Aromaträger wie auch die Wassermenge, welche in Kontakt mit dem Aromaträger steht deutlich zu verringern und mittels des Drucks und der Zwangsförderung zu regeln. Dies erlaubt auch eine Körnung des Aromaträgers sehr fein zu halten, da das Wasser nicht mit der Schwerkraft sondern mit Druck durch den Aromaträger getrieben wird, so dass die Kapillarkräfte auch eines sehr feinkörnigen Aromaträgers leicht überwunden werden können. Die Feinkörnigkeit des Aromaträgers aber wirkt sich wiederum positiv auf den Ertrag an Getränk aus dem Aromaträger aus, da in kürzerer Zeit ein grösserer Volumenanteil der Aromaträger-Körner extrahiert werden kann und die Aromen aus einem grösseren Volumenanteil jedes Korns extrahiert werden.

Der Aromaträger wird vorteilhaft an unterschiedlichen Stellen des Extraktionsbereichs unterschiedlichen Druckverhältnissen ausgesetzt. Dadurch lassen sich unterschiedliche Fraktionen des aus dem Aromaträger extrahierbaren Extraktes gezielt extrahieren.

Auch wird vorteilhaft der Aromaträger an unterschiedlichen Stellen des Extraktionsbereichs unterschiedlichen Temperaturen ausgesetzt. Damit lässt sich die mengenanteilmässige Extraktion einzelner Fraktionen des Extraktes regeln.

Weiter ist es zweckmässig, an unterschiedlichen Stellen des Extraktionsbereichs dem Aromaträger Wasser zuzugeben und/ oder Wasser zu entziehen. Damit lässt sich das volle Aroma verschiedener Kaffeezubereitungsarten, wie Filterkaffee und Espresso-Kaffee, kombinieren.

Wenn mit den bisherigen Zubereitungsarten lediglich eine bestimmte Extraktionsart durchgeführt werden konnte, so hat das erfindungsgemässe Verfahren den Vorteil, dass die Extraktion mehr als eine Extraktionsart umfassen kann. Es umfasst daher vorteilhaft wenigstens zwei der nachgenannten Extraktionsstufen:
a. Lösen von wasserlöslichen Stoffen im Wasser,
b. Ausschwemmen von Feinpartikeln aus dem Aromaträger,
c. Auspressen von Ölen aus dem Aromaträger.

Für die Extraktion werden vorteilhaft wenigstens zwei der nachgenannten Verfahrensstufen durchlaufen:
a. Benetzen des Aromaträgers mit Wasser, und praktisch druckloses Trennen des Wassers vom Aromaträger,
b. Durchströmen des Aromaträgers mit Wasser unter einem dynamischen hydraulischen Druck von wenigstens 10 bar,
c. Beaufschlagen des Aromaträgers mit Druck und Auspressen von Wasser aus dem Aromaträger,
d. Trockenpressen des Aromaträgers mit einem Druck von über 20 bar.

Jede dieser Verfahrensstufen setzt unterschiedliche Fraktionen des extrahierbaren Extraktes frei. Durch eine quantitative Begrenzung der einzelnen Verfahrensstufen kann der Anteil der durch diese Stufe extrahierten Aromastoffe geregelt werden. Der Druck kann nicht nur sukzessive zunehmen, sondern es können auch Phasen des Druckabbaus, des Vakuums und des Druckwechsels im Verfahren vorgesehen sein. Es ist auch zu unterscheiden von einem Beaufschlagen des Aromaträgers mit Wasserdruck oder mit einem Körperdruck. Durch den körperlichen Druck, insbesondere durch Verkleinerung des Volumens des Raumes um den Aromaträger, können mit oder ohne Wasser ölige und fettige Anteile des Aromaträgers aus diesem ausgepresst werden.

Vorteilhaft wird der Aromaträger, der für eine Genussmenge ausreicht, als Schicht ausgebreitet. Sodann werden zur Herstellung einer einzelnen Genussmenge eine Mehrzahl von Teilbereichen der Schicht nacheinander extrahiert. Dies erlaubt ein kontinuierliches Herstellungsverfahren des Getränkes. Zudem kann eine Teilmenge, bzw. die jeweils zu einem bestimmten Zeitpunkt der Extraktion unterzogene Menge an Aromaträger sehr gering sein.

Zweckmässigerweise wird der Aromaträger in einer Schicht entlang einer Führungsbahn durch den Extraktionsbereich gefördert. Die Schicht kann unterteilt oder ununterbrochen sein. Sie deckt zweckmässigerweise die Führungsbahn auf der gesamten Länge ab. Es kann jeweils lediglich ein Teilbereich dieser Schicht im Extraktionsbereich liegen und kann dort extrahiert werden. Die Dauer, über welche das Verfahren durchgeführt wird, kann stufenlos verlängert und so die Extraktmenge stufenlos vergrössert werden. Der Extraktionsvorgang kann jederzeit beendet werden. Dadurch kann während dem Extraktionsprozess die Extraktionsmenge stufenlos gewählt werden.

Alternativ zur Förderung des Aromaträgers als Schicht kann der Aromaträger auch in Form von räumlich getrennten Portionen zeitlich getrennt durch den Extraktionsbereich hindurch gefördert werden. Dies ergibt eine kleinstufige Abstufung der Extraktionsmengen.

Vorteilhaft ist die Menge an Aromaträger, welche in Extraktionsbereich liegt sehr klein im Verhältnis zur Menge an Aromaträger, welche zur Herstellung eines Genussmenge des Getränkes notwendig ist. Zur Herstellung einer Genussmenge von 15 Zentiliter eines sehr starken Kaffees bis 200 Zentiliter eines eher wässerigen Kaffees werden bisher ca. 5 bis 12 Gramm Kaffeebohnen verwendet. Im Extraktionsbereich liegen daher jederzeit vorteilhaft weniger als 5 Gramm, bevorzugt weniger als 2 Gramm, besonders bevorzugt weniger als 1 Gramm Kaffeemahlgut vor.

In einer Ausführungsform des Verfahrens wird die Schicht in aneinander angrenzende Kleinportionen unterteilt. Die Kleinportionen werden in einer ununterbrochenen Reihe gefördert. Dies erlaubt eine beliebige Anzahl von Kleinportionen zu extrahieren und nach jeder Kleinportion oder während des Extrahierens einer Kleinportion das Verfahren zu stoppen. Wird das Verfahren nur nach Abschluss einer Extraktion einer Kleinportion unterbrochen, so gilt, dass je kleiner die Kleinportionen sind, umso kleiner die wählbaren Extraktionsmengenunterschiede sind. Wenn die Kleinportionen sehr klein sind, kann auch eine Kleinportion lediglich teilweise extrahiert werden, ohne dass dadurch ein grosser Verlust oder eine spürbare Qualitätsminderung des Getränkes bewirkt wird. Die bereits teilweise extrahierte Kleinportion kann dann zu Beginn einer nächsten Getränkeherstellung zu Ende extrahiert werden, ohne dass die Qualität des Getränks spürbar leiden würde. Der Anteil an länger benetztem Aromaträger und länger in Kontakt mit dem Aromaträger gestandenem Wasser ist im Verhältnis zur Gesamtmenge des Extraktes vernachlässigbar.

Vorteilhaft enthält jede Kleinportion einen Bruchteil einer für eine einzelne Genussmenge benötigten Menge des Aromaträgers. Eine einzelne Genussmenge ist dabei eine Tasse, z.B. eine Espressotasse oder ein Milchkaffeetasse, welche je nach darin dargereichtem Getränk unterschiedlich voluminös ausgebildet ist. Vorteilhaft enthält die Kleinportion höchstens ein Drittel der für eine Genussmenge benötigten Menge des Aromaträgers, besonders bevorzugt weniger als ein Fünftel.

Der Aromaträger kann kontinuierlich oder intermittierend entlang der Führungsbahn gefördert werden. Ebenso kann das Wasser kontinuierlich oder intermittierend zugeführt werden. Eine kontinuierliche Bewegung wird bevorzugt, da diese z.B. einen Antrieb und Unterbrechungsmittel wie Ventile weniger beansprucht. Die intermittierende Förderung kann jedoch ebenfalls Vorteile aufweisen, für die eine höhere Abnutzung einer Vorrichtung hingenommen wird.

Das Wasser wird vorteilhaft bezüglich der Förderrichtung der Schicht seitlich in die Schicht hineingeführt und wieder seitlich aus der Schicht hinausgeführt. Die Fliessrichtung des Wassers kann die Schicht eine gewisse Strecke begleitend oder entgegen der Förderrichtung der Schicht sein. Die Fliessrichtung des Wassers ist vorteilhaft so gewählt, dass das Wasser quer zur Förderrichtung des Aromaträgers durch die Schicht des Aromaträgers hindurchströmt.

Gleichzeitig werden zweckmässigerweise höchsten drei, vorzugsweise höchsten zwei Kleinportionen mit Wasser durchsetzt. Zweckmässigerweise wird jeweils zwischen zwei Kleinportionen eine praktisch wasserdichte Dichtstelle gebildet, um angrenzenden Kleinportionen vor der Extraktion trocken bewahren zu können.

Der Aromaträger wird während der Förderung des Aromaträgers vorteilhaft komprimiert. Eine solche Kompression kann zweimal zweckmässig sein: ein erstes Mal vor der Extraktion, um den Aromaträger auf die Extraktion vorzubereiten und gegebenenfalls mit dem komprimierten Aromaträger eine Dichtstelle zu schaffen, und ein zweites Mal nach der Extraktion, um die im und zwischen dem Aromaträger gefangene Restwassermenge aus dem Aromaträger auszupressen. Die Kompression kann auch einen Einfluss haben auf den Aromagehalt des Extraktes.

Eine Vorrichtung zur Herstellung eines trinkfertigen Getränkes durch extrahierende Behandlung eines feststofflichen Aromaträger mittels Wasser weist ebenso wie die Vorrichtung gemäss der US 4,134,332 einen Extraktionsbereich zur Aufnahme eines Aromaträgers und einen Zuführungskanal für den Aromaträger auf. Dieser Extraktionsbereich liegt auf der Förderbahn zwischen, einer Zuführungsleitung für das Wasser, welche in den Extraktionsbereich mündet, und einer an den Extraktionsbereich anschliessenden Sieb-/Filtereinrichtung, mit welcher der Aromaträger vom Aromastoffe enthaltenden Wasser getrennt werden kann.

Darüber hinaus besitzt die erfindungsgemässe Vorrichtung jedoch eine mechanische Fördereinrichtung, um den Aromaträger zwingend durch den Extraktionsbereich zu fördern, und gegebenenfalls eine Einrichtung, um das Wasser mit Druck durch den Extraktionsbereich zu pressen. Der Extraktinsbereich ist erfindungsgemäss derart dimensioniert, dass zu jedem Zeitpunkt darin lediglich ein Bruchteil der Menge an Aromaträger vorliegen kann, welche für eine einzelne Genussmenge erforderlich ist. Die Vorteile dieser Vorrichtung liegen darin, dass die verfahrenstechnischen Aspekte der gestellten Aufgabe mit ihr gelöst werden können, was im Einzelnen bereits beschrieben wurde.

Die Vorrichtung besitzt zweckmässigerweise eine Führungsbahn, auf welcher der Extraktionsbereich ausgebildet ist, und in welcher der Aromaträger vorliegen kann und durch den Extraktionsbereich gefördert werden kann. Diese Führungsbahn erlaubt gegebenenfalls die Zwangsförderung von gekörntem Granulat, das lose auf der Führungsbahn liegt. Zweckmässigerweise besitzt dazu die Fördereinrichtung Trennwände, welche die Führungsbahn in Kammern unterteilen.

Diese Kammern weisen ein Volumen auf, welches vorteilhaft höchstens einem Bruchteil einer zur Herstellung einer Genussmenge des Getränkes erforderlichen Menge des Aromaträgers Raum bietet. Dadurch müssen mehrere Kammern den Extraktionsbereich durchlaufen, um eine Genussmenge des Getränkes herzustellen. Die Vorteile davon sind: Geringe Qualitätseinbusse bei nur teilweiser Extraktion des Inhalts einer Kammer und dadurch die Möglichkeit des Unterbrechens des Extraktionsprozesses zu einem beliebigem Zeitpunkt.

Die Fördereinrichtung kann für eine kontinuierliche oder intermittierende Förderung des Aromaträgers ausgerüstet sein.

Zweckmässigerweise mündet die Zuführungsleitung seitlich in die Führungsbahn und ist die Sieb-/Filtereinrichtung seitlich an der Führungsbahn angeordnet. Dies ermöglicht es, bei einer grossen Längsausdehnung der Führungsbahn eine Durchflussstrecke dennoch sehr kurz auszubilden.

Zweckmässigerweise besitzt die Mündung der Zuführungsleitung in Förderrichtung des Aromaträgers eine Ausdehnung, welche kürzer als eine doppelte Länge einer Kammer ist, vorzugsweise sogar kürzer als eine einfache Länge einer Kammer. Die Sieb-/Filtereinrichtung begrenzt vorteilhaft jeweils wenigstens diejenige Kammer, in welche die Zuführungsleitung mündet.

Stromaufwärts der Mündung der Zuführungsleitung liegt vorteilhaft eine Dichtstelle auf der Führungsbahn. Diese trennt einen Trockenbereich des Aromaträgers von einem Nassbereich des Aromaträgers ab. Eine zweite Dichtstelle stromabwärts der ersten Dichtstelle bietet den Vorteil, dass zwischen den beiden Dichtstellen die Extraktion unter hohem Druck ausgeführt werden kann.

Um die Kammern vor und nach dem Extraktionsbereich gegeneinander weitgehend wasserdicht abzudichten, weist die Fördereinrichtung zweckmässigerweise Kammerwände auf, zwischen welchen Kammerwänden innerhalb der Führungsbahn Kammern gebildet sind.

Die Führungsbahn weist vorteilhaft eine im Querschnitt senkrecht zur Längsrichtung der Führungsbahn verengte Stelle auf. Beim Durchgang durch diese Stelle wird ein Aromaträger komprimiert. Diese Kompression kann zur Ausbildung einer Dichtstelle genutzt werden, oder aber lediglich als Vorbereitung des Aromaträgers auf seine Extraktion und zum Auspressen des im Aromaträger verbliebenen Restwassers.

In einem Ausführungsbeispiel einer erfindungsgemässen Vorrichtung ist eine Führungsbahn zwischen einem Wendel einer Transportschnecke ausgebildet oder sind mehrere Führungsbahnen zwischen mehreren Wendeln einer Transportschnecke ausgebildet. Diese Transportschnecke kann zur Bildung einer Mehrzahl von Kammern mit einer zweiten Schnecke in Eingriff sein. Die so gebildeten Kammern verschieben sich beim Drehen der Schnecken in axialer Richtung der Schnecken. Eine Schnecke kann auch mit einer Zahnraupe in Eingriff sein, so dass jeweils ein Wendel der Schnecke eine Kammer bildet, welche vorne und hinten durch zwei einander folgende Zähne der Zahnraupe abgeschlossen ist.

Eine Dichtstelle auf der Transportschnecke kann aber auch mit einem Zahnrad gebildet sein, welches Zahnrad in Eingriff mit dem Wendel der Transportschnecke ist.

Eine Dichtstelle kann auch durch eine Verengung des Querschnittes der Führungsbahn gebildet sein, wobei die Verengung derart bemessen ist, dass das Granulat an der Dichtstelle derart stark komprimiert ist, dass die Führungsbahn durch das komprimierte Granulat praktisch abgedichtet ist.

Die Führungsbahn kann in einem zweiten Ausführungsbeispiel durch einen geradlinig verlaufenden oder gebogen verlaufenden Kanal gebildet sein. Die Fördereinrichtung weist Kammerwände auf, welche diesen Kanal in eine Mehrzahl von Kammern unterteilen. Diese Kammerwände sind im Kanal mit einem Antrieb verschiebbar angeordnet.

Die Kammerwände sind dabei zweckmässigerweise an einem elastischen Band ausgebildet, welches in einer Endlosschlaufe geführt ist.

Es können auch zwei elastische Bänder mit Kammerwänden ausgerüstet und die Bänder einander gegenüberliegend angeordnet sein, so dass in einem Transportbereich jeweils eine Kammerwand des einen Bandes eine Kammerwand des anderen Bandes berührt. Der Vorschub der beiden Bänder ist zweckmässigerweise miteinander gekoppelt.

Gemäss einem dritten Ausführungsbeispiel ist die Fördereinrichtung um eine Achse drehbar und weist radiale Kammerwände auf. Die Kammerwände sind vorteilhaft in radialer Richtung beweglich.

### Kurzbeschreibung der Figuren

Die Erfindung wird im Folgenden anhand einer Auswahl von Ausführungsbeispielen erläutert. Es zeigt schematisch:
- Fig. 1: eine Vorrichtung zur Durchführung des erfindungsgemässen Verfahrens,
- Fig. 2: eine Ansicht einer Fördereinrichtung mit zwei zusammenwirkenden Bändern,
- Fig. 3: eine perspektivische Skizze einer Fördereinrichtung mit zwei Bändern gemäss Figur 2,
- Fig. 4: eine perspektivische Skizze einer Fördereinrichtung mit einem einzigen Band,
- Fig. 5: eine perspektivische Skizze einer Förderschnecke mit Zahnraupe,
- Fig. 6: eine Ansicht der Förderschnecke gemäss Figur 5 mit einem geschnitten dargestellten Gehäuse,
- Fig. 7: zwei ineinander greifende Förderschnecken,
- Fig. 8: eine Förderschnecke mit einem mit deren Wendel in Eingriff stehendem Zahnrad,
- Fig. 9: eine Förderschnecke mit Verdichtungskonus vor einem Extraktionsbereich,
- Fig. 10: eine Förderschnecke mit je einem Verdichtungskonus vor und nach dem Extraktionsbereich,
- Fig. 11: eine Förderschnecke mit einem Verdichtungskonus nach dem Extraktionsbereich,
- Fig. 12: eine teilweise geschnittene Ansicht einer Förderschnecke, welche mit einem Mahlwerk kombiniert ist,
- Fig. 13: eine perspektivische Darstellung der Förderschnecke gemäss Figur 12,
- Fig. 14: eine perspektivische Darstellung einer Förderspirale,
- Fig. 15: perspektivisch ein Förderrad mit radial beweglichen Kammerwänden,
- Fig. 16: eine Ansicht des Förderrades gemäss Fig. 15.

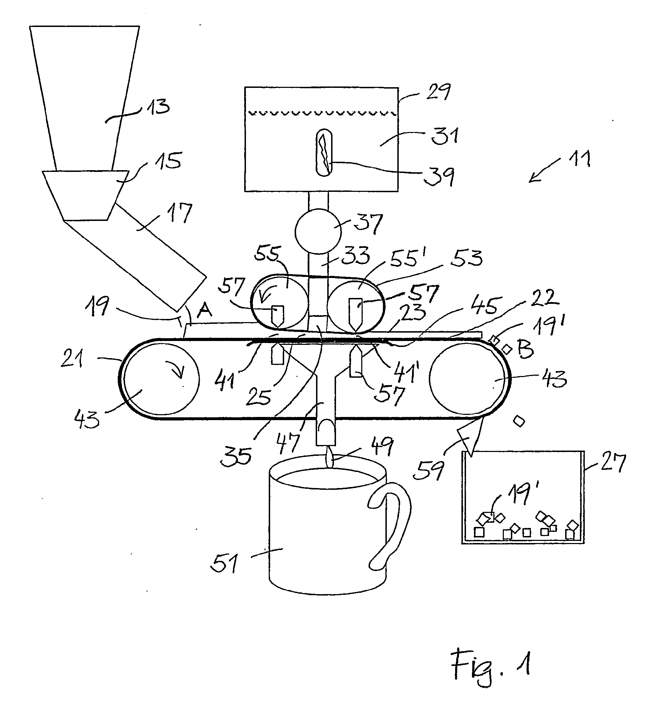

Die in Figur 1 dargestellte Schemazeichnung einer Kaffeemaschine 11 zeigt einen Bohnenbehälter 13 mit daran anschliessend einem Mahlwerk 15. An das Mahlwerk anschliessend ist eine Zuführungseinrichtung 17 dargestellt, um das Mahlgut 19 auf einen Mahlgutträger 21 zu leiten. Der Mahlgutträger bildet eine Förderbahn 22. Auf dem Mahlgutträger 21 ist eine Schicht 23 des Mahlguts 19 ausgebreitet. Das frische Mahlgut 19 ist ein Aromaträger. Das Aroma des Mahlgutes 19 wird in einem Extraktionsbereich 25 aus dem Mahlgut 19 extrahiert. Die Schicht 23 enthält hinter dem Extraktionsbereich 25 verbrauchtes Mahlgut 19', dessen Aroma (wasserlösliche Stoffe, Feststoffe, Öle und Fette) im Wesentlichen extrahiert ist. Dieses verbrauchte Mahlgut 19' gelangt in einen Abfallbehälter 27.

Die Schemazeichnung der Figur 1 zeigt weiter einen Wasserbehälter 29 und darin Wasser 31. An den Wasserbehälter 29 ist eine Wasserzuleitung 33 angeschlossen. Diese mündet an einer Stelle 35 in den Extraktionsbereich 25. In die Wasserzuleitung ist eine Druckpumpe 37 eingegliedert. Das Wasser 31 besitzt bei der Mündung in den Extraktionsbereich zweckmässigerweise 97 °C. Zum Aufheizen des Wassers 31 auf diese Temperatur ist im Wasserbehälter 29 ein Heizelement 39 angeordnet. Das Heizelement 39 könnte auch in die Wasserzuleitung 33 eingegliedert sein.

Der Extraktionsbereich 25 ist zwischen zwei Dichtstellen 41 ausgebildet. Der Mahlgutträger 21 ist ein Endlosband, welches um zwei Rollen 43 und durch den Extraktionsbereich 25 geführt ist. Das Endlosband ist wasserdurchlässig. Entlang des Extraktionsbereichs 25 ist das Endlosband gestützt durch eine Filterplatte 45. Unter der Filterplatte 45 ist ein Trichter 47 zum Auffangen des Extraktes angeordnet. Dieser Trichter 47 leitet den Kaffee 49 in eine Tasse 51.

Damit das Wasser 31 im Extraktionsbereich 25 mit Druck durch die Schicht 23 hindurchgepresst werden kann, ist die Schicht 23 in diesem Bereich zwischen dem Endlosband des Mahlgutträgers 21 und einem zweiten Endlosband, dem Kompressionsband 53 gehalten. Das Kompressionsband 53 ist um zwei Kompressionswalzen 55, 55' gespannt. Die Kompressionswalzen 55,55' sind gegen die Filterplatte 45 gepresst. Die Pfeile 57 stellen den Druck dar, mit dem die Kompressionswalzen 55, 55' die Schicht 23 komprimieren. Die in Förderrichtung (von links nach rechts, von A nach B) erste Kompressionswalze 55 ist weniger stark gegen die Filterplatte 45 gepresst als die zweite Kompressionswalze 55'. Das Kompressionsband 53 kann, entgegen der Darstellung, im Bereich zwischen den Kompressionswalzen 55,55' einen Bereich aufweisen, in welchem die Kompression der Schicht geringer ist als bei den Kompressionswalzen 55, 55'. Die Schicht 23 ist daher an verschiedenen Stellen des Extraktionsbereichs 25 unterschiedlich stark komprimiert.

Der Wasserdruck liegt bei wenigstens 7 oder 10x10⁵Pa. Es kann mit der Druckpumpe 37 auch ein Wasserdruck von bis zu 25 oder gar 30 x10⁵Pa aufgebaut werden. Der Druck an den Dichtstellen 41 liegt über dem dynamischen Druck des Wassers 31 an diesen Stellen. An den Dichtstellen 41 liegt der dynamische Wasserdruck beispielsweise bei etwa 7x10⁵Pa. Die erste Kompressionswalze 55 presst mit 10x10⁵Pa, die zweite Kompressionswalze 55' mit 30x10⁵Pa.

Mit dieser Vorrichtung wird ein Kaffee folgendermassen hergestellt: Kaffeebohnen gelangen aus dem Bohnenbehälter 13 in das Mahlwerk 15 und werden darin zu einem feinen Pulver zermahlen. Dieser Aromaträger 19 gelangt nun durch die Zuführungseinrichtung 17 auf den Mahlgutträger 21. Auf dem Mahlgutträger 21 wird mit dem Mahlgut 19 eine Schicht 23 gebildet. Diese Schicht 23 wird nun von links nach recht entlang eines Förderwegs von A nach B gefördert. Die Zwangsförderung bewirkt, dass das Mahlgut 19 zwischen dem Kompressionsband 53 und dem Mahlgutträger 21 in einen Extraktionsbereich 25 gelangt. Zwischen dem Kompressionsband 53 und dem Mahlgutträger 21 wird das Mahlgut 19 komprimiert. Die Kompression ist zunehmend.

In diesen Extraktionsbereich 25 wird heisses Wasser 31 mit Druck eingepresst. Dieses Wasser weicht teilweise in einen schwächer komprimierten Schichtbereich aus, teilweise durchdringt es die Schicht 23 auf direktem Weg und gelangt durch die Poren des Mahlgutträgers 21 und die Öffnungen der darunter angeordneten Filterplatte 45 in den Trichter 47. Das direkt durchgepresste Wasser 31 nimmt dabei diejenigen Anteile an Aromastoffen mit, die üblicherweise für einen Espresso-Kaffee extrahiert werden. Das gegen die Förderrichtung ausweichende Wasser liegt etwas länger im Aromaträger, weicht diesen an und nimmt Aromastoffe auf, die üblicherweise bei der Herstellung von Filterkaffee extrahiert werden. Dieses Wasser wird teilweise durch die mit der fortschreitenden Förderung zunehmende Kompression ausgepresst, teilweise weitergefördert und vom direkt durchströmenden Wasser mitgerissen. Im Aromaträger zurückbleibendes Wasser wird durch die mit der fortschreitenden Förderung zunehmende Kompression praktisch vollständig aus dem Aromaträger 19 ausgepresst.

Durch den hohen Kompressionsdruck der zweiten Kompressionswalze 55' wird aber noch ein weiterer Extraktionsschritt ausgeführt. Durch die Kompression des Aromaträgers 19 wird auch Öl und Fett aus dem Aromaträger 19 ausgepresst, welches ebenfalls das Trägerband 21 durchdringt und in den Trichter 47 gelangt. Der Extrakt aus dem Kaffeepulver 19 enthält daher unterschiedliche Fraktionen, welche dank entlang des Förderwegs sich verändernder Parameterwerten verschiedener Parameter aus dem Aromaträger 19 extrahiert werden. Der Wert des Parameters Kompression nimmt entlang des Förderwegs mehr oder weniger stetig zu, der Wert des Parameters Benetzungszeit ist für das direkt durch die Schicht 23 hindurchgepresste Wasser kürzer als für das ausweichende Wasser. Der Parameter Wassertemperatur ist praktisch unverändert. Der Wert des Parameters dynamischer Wasserdruck ist anfangs niedriger, danach nimmt er zu, um anschliessend wieder abzunehmen.

Der Extrakt 49 wird bezüglich der Förderrichtung seitlich aus dem Aromaträger 19 ausgetrieben. Er tritt über die gesamte Länge des Extraktionsbereichs 25 aus der Schicht 23 aus und gelangt durch den Trichter 47 in die Tasse 51. Der extrahierte Aromaträger 19' gelangt in den Abfallbehälter 27. Auf dem Trägerband 21 haftender Aromaträger 19' wird durch einen Schaber 59 abgelöst.

Dank der kontinuierlichen Herstellung des Getränks kann eine beliebige Menge Kaffee in gleichbleibender Qualität hergestellt werden. Der im Extraktionsbereich 25 vorliegende Aromaträger 19 ist etwa zwei Gramm schwer. Für eine Tasse Kaffee wird die dreifache oder vierfache Menge des im Extraktionsbereich vorliegenden Aromaträgers benötigt. Wird das Verfahren unterbrochen, bleibt weniger als ein 20stel der für eine Tasse benötigten Wassermenge im Aromaträger und wird erst bei der nächsten Tasse ausgepresst. Dieser Anteil ist jedoch für die Getränkequalität vernachlässigbar.

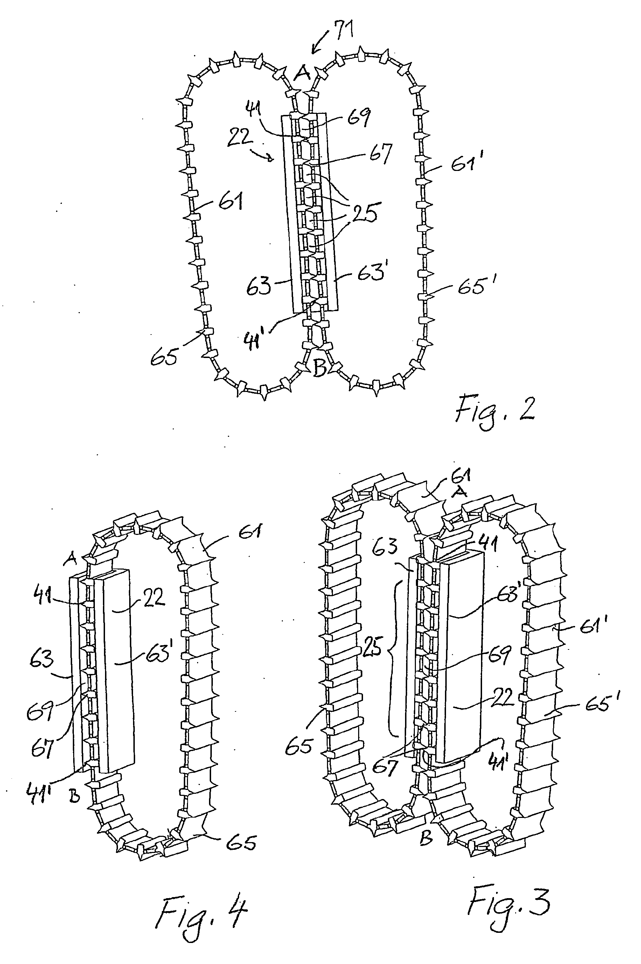

Die Figuren 2 bis 16 zeigen verschiedene Ausführungsbeispiele von Fördereinrichtungen für eine solche Vorrichtung. In Figuren 2 und 3 sind zwei in einem Extraktionsbereich 25 miteinander laufende Bänder 61,61' dargestellt. Diese Bänder 61,61' laufen zwischen zwei Platten 63, 63' hindurch und endlos um je zwei nicht dargestellte Umlenkräder. Zwischen den Platten ist der Extraktionsbereich 25 gebildet. Die Platten und die Bänder bilden zusammen eine Förderbahn 22, entlang welcher der Aromaträger einen Förderweg von A nach B zurücklegt.

Die Bänder 61,61' sind mit einer Vielzahl von Trennwänden 65,65' bestückt. Diese Trennwände 65,65' sind in regelmässigen Abständen auf den Bändern 61,61'angeordnet. Die Trennwände 65 des einen Bandes 61 und die Trennwände 65' des anderen Bandes 61' können zusammenwirken und sind einander gegenüber angeordnet. Zusammenwirkende Trennwände 65,65' bilden eine Kammerwand 67 zwischen zwei durch diese Kammerwand getrennten Kammern 69. Zwischen den Platten 63,63' ist eine Reihe von Kammern 69 gebildet. Die Platten 63,63' nähern sich in Vorschubrichtung einander an. Dadurch sind die Kammern 69 umso kleiner, je weiter sie zwischen die Platten auf dem Förderweg in Richtung B vorgeschoben sind.

Diese Kammern 69 öffnen sich in Vorschubrichtung nach dem Extraktionsbereich 25, so dass der Inhalt aus den Kammern 69 entfernt werden kann. In Vorschubrichtung vor dem Extraktionsbereich 25 nähern sich die Bänder 61,61' einander an und die Kammerwände 67 werden durch zwei sich berührende Trennwände 65,65' gebildet. In diesem Bereich 71 wird im Betrieb der Vorrichtung ein Aromaträger in die sich schliessenden Kammern 69 eingefüllt.

Der eingefüllte Aromaträger 19 wird im Extraktionsbereich 25 mit Wasser 31 durchströmt. Dies kann beispielsweise in einer Richtung quer zur Förderrichtung und parallel zu den Platten 63,63' geschehen. Dazu muss wenigsten jeweils eine Kammer im Extraktionsbereich seitlich durch eine Sieb-/Filtereinrichtung begrenzt sein. Das Wasser kann zusammen mit dem Aromaträger drucklos in die Kammer 69 eingefüllt werden und durch die Kompression des in der Kammer 69 vorliegenden Aromaträgers aus diesem ausgepresst werden. Es kann auch mit Druck durch die in den Kammern 69 vorliegende Schicht 23 des Aromaträgers 19 hindurchgepresst werden.

In Figur 4 ist eine Fördereinrichtung mit nur einem solchen Band 61 dargestellt. Das Band durchläuft den Extraktionsbereich 25 zwischen den beiden Platten 63,63' von A nach B. Eine Kompression des Aromaträgers 19 kann nur in beschränktem Mass vorgenommen werden, da jede Kammerwand lediglich durch eine einzige Trennwand 65 gebildet werden muss. Das Mass der Kompression ist durch die Elastizität der Trennwand begrenzt.

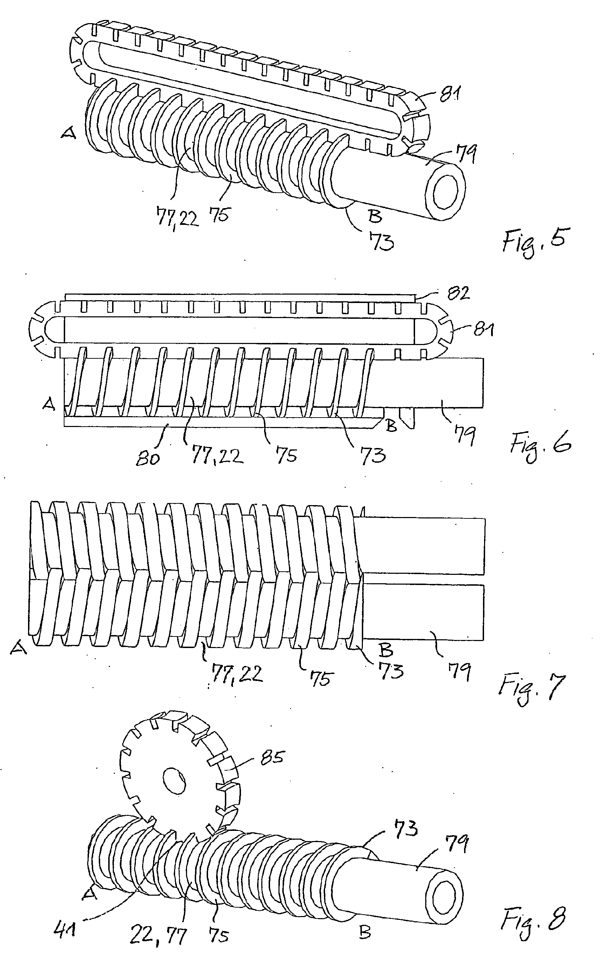

In den Figuren 5 bis 13 sind Förderschnecken dargestellt. Diese Förderschnecken 73 besitzen jeweils einen Wendel 75. Zwischen dem Wendel 75 liegt ein schraubenförmiger Raum 77, der als Förderbahn 22 dient, so dass der Aromaträger entlang der Förderbahn 22 einen Förderweg von A nach B zurücklegt. Es könnten jeweils auch zwei Wendel sein, zwischen denen zwei schraubenförmige Räume liegen. Dieser Raum 77 und der Wendel 75 sind um einen Kern 79 herum gewunden. Es ist die Eigenart solcher Förderschnecken, dass der Druck in der mit der Förderschnecke geförderten Masse stark zunehmen kann gegen Ende der Förderdistanz. Eine verengte Auslassöffnung (z.B. bei B in Fig. 6) genügt, um während dem Betrieb der Förderschnecke 73 im schraubenförmigen Raum 77 den Druck ansteigen zu lassen. Zusätzlich lässt sich durch eine Querschnittverjüngung des schraubenförmigen Raumes 77 eine Drucksteigerung im geförderten Material und eine Kompression des geförderten Materials 19 erreichen.

Eine solche Förderschnecke 73 ist deshalb ein geeignetes Mittel zur Förderung des Aromaträgers 19 durch den Extraktionsbereich 25 einer erfindungsgemässen Vorrichtung. Eine Zugabe von Wasser 31 zum Aromaträger 19 kann von einem hohlen Kern 79 aus durch eine perforierte Wandung des Kerns erfolgen. Die Sieb-/Filtereinrichtung kann zumindest partiell einen zylindrischen Rohrkörper 80 (Fig. 6,12 und 13) bilden, in welchem die Förderschnecke 73 drehbar angeordnet ist.

Es gibt unterschiedliche Möglichkeiten den schraubenförmigen Raum 77 einer solchen Förderschnecke 73 in diskrete Kammern zu unterteilen. In Figuren 5 und 6 ist eine erste Art zu unterteilen dargestellt. Hier geschieht die Unterteilung mit einer Raupe 81, welche in Eingriff mit dem Wendel 75 der Förderschnecke 73 ist. Diese Raupe 81 unterteilt den schraubenförmigen Raum 77 in einzelne Windungen von 360 Grad. Jede Windung bildet eine gegen die benachbarten Windungen abgeschottete Kammer. Der Inhalt jeder Kammer wird bei jeder Umdrehung der Förderschnecke 73 um eine Steigung des Wendels 75 gefördert.

Bei einer solchen Förderschnecke wird im Betrieb die Rohrwandung, d.h. auch die Sieb-/Filtereinrichtung, vom Wendel 75 gereinigt, der Wendel und der Kern 79 werden von der Raupe 81 gereinigt, und die Raupe 81 wird vom Wendel 75 und von einer Führung 82 für die Raupe 81 gereinigt.

Die in Figur 7 dargestellte Doppelschnecke 73,83 bildet eine weitere Möglichkeit, den schraubenförmigen Raum 77 einer Förderschnecke 73 in diskrete Kammern zu unterteilen. Die beiden Schnecken greifen mit ihren Wendeln in den schraubenförmigen Raum der benachbarten Schnecke und unterteilen diesen dadurch.

Eine dritte Möglichkeit zur Unterteilung dieses Raumes 77 bietet ein Zahnrad 85. Das Zahnrad 85 greift zwischen den Wendel 75 und schliesst damit an einer Stelle den schraubenförmigen Raum ab. Dadurch kann sich während dem Zwangsfördern des Aromaträgers 19 im schraubenförmigen Raum 77 ein sehr hoher Druck aufbauen. Eine geeignete Querschnittform des Wendels 75 ermöglicht es, den Raum 77 einigermassen dicht abzuschliessen.

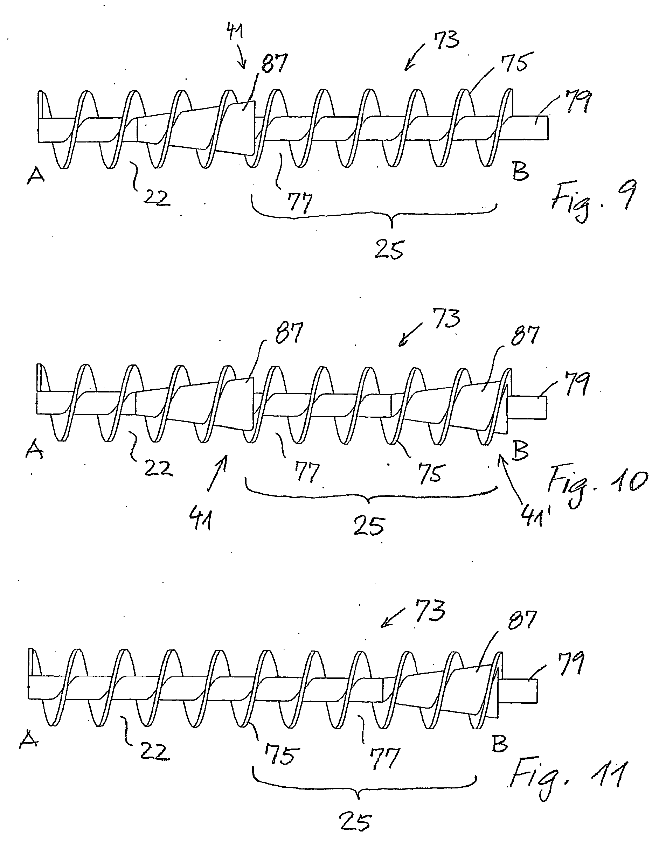

In den Figuren 9 bis 11 sind Förderschnecken 73 mit einem Kern 79 dargestellt, welche Kerne jeweils an wenigsten einer Stelle zu einem Verdichtungskegel 87 aufgeweitet sind. Jeder Verdichtungskegel 87 verengt den Querschnitt des schraubenförmigen Raumes 77 zwischen dem Kern 79, dem Wendel 75 und einer in den Figuren nicht dargestellten Rohrwandung. Dadurch kann ein geförderter Aromaträger verdichtet werden. Es kann in ihm enthaltener Extrakt ausgepresst werden.

Eine solche Verdichtung kann, wie in Figur 9 und 10, vor einem Extraktionsbereich 25 vorhanden sein, um eine Dichtstelle 41 zu schaffen. Diese Dichtstelle verhindert, dass der Aromaträger 19 vor der Dichtstelle benetzt wird. Es kann diese Verdichtung auch bereits im Aromaträger 19 enthaltene Aromastoffe, insbesondere Fette und Öle, aus dem Aromaträger auspressen. Dadurch sind diese einfacher und rascher mit dem Wasser extrahierbar.

Eine solche Verdichtung kann auch, wie in Figur 10 und 11 dargestellt, nach dem Extraktionsbereich 25 zweckmässig sein, um Extrakt aus dem Aromaträger 19 auszupressen. Auch an dieser Stelle können Fette und Öle aus dem Aromaträger ausgepresst werden. Die Figuren zeigen auch, dass an mehreren Stellen eine Verdichtung vorhanden sein kann.

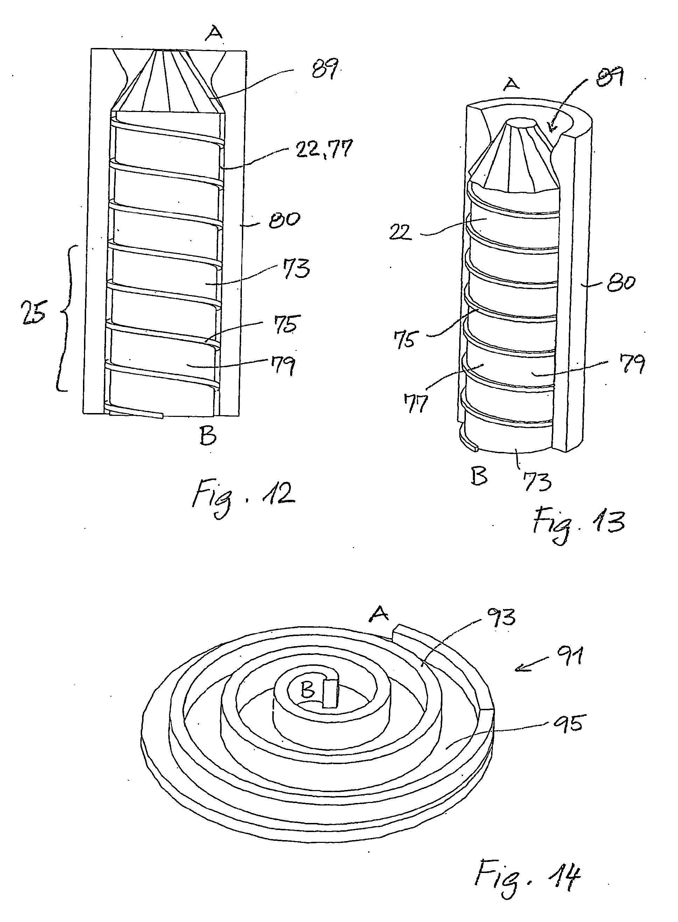

In Figuren 12 und 13 ist der Förderschnecke 73 ein Mahlwerk 89 vorgeschaltet. Das Mahlwerk dient dazu, Kaffeebohnen zu verkleinern und das Mahlgut dadurch extrem frisch dem Extraktionsbereich 25 zuzuführen. Das Mahlgut gelangt sofort auf die Förderbahn 22, gebildet durch den schraubenförmigen Raum 77 der Förderschnecke 73. Dieser Raum bildet zumindest partiell den Extraktionsbereich 25.

Die in Figur 14 dargestellte Förderspirale 91 wird vorteilhaft von aussen nach innen betrieben, also im Gegenuhrzeigersinn drehend. Die spiralförmige Wandung 93 definiert eine spiralförmige Förderbahn 95, auf welcher der Aromaträger von A nach B gefördert wird. Wenigstens zwei Zapfen (nicht dargestellt), welche radial verschieblich geführt sind, können in die Förderbahn 95 hineinreichen und diese zwischen der Wandung 93 abschliessen, um so zwischen den Zapfen eine Kammer zu bilden. Beim Drehen der Förderspirale werden die Zapfen dem Zentrum (B) zu geschoben. Diese Kammer wird im Volumen sehr stark reduziert, je weiter die Zapfen gegen das Zentrum der Förderspirale 91 vorgeschoben werden.

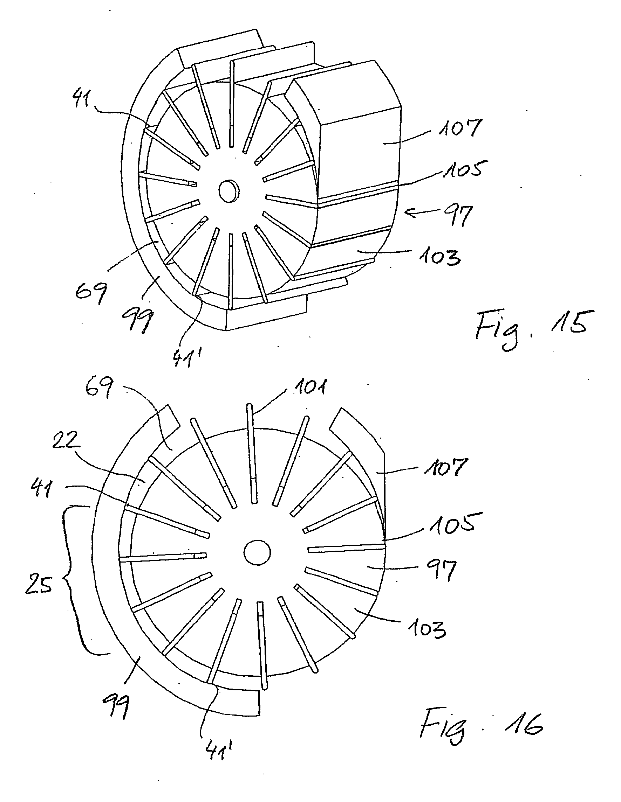

Eine weitere Fördereinrichtung ist in Figuren 15 und 16 dargestellt. Diese besteht aus einem Schaufelrad 97, welches in einer etwa kreisrunden Führung 99 angeordnet ist. Das Schaufelrad 97 besitzt Trennwände 101, welche wie Schaufeln radial über den Durchmesser eines inneren Radkörpers 103 vorstehen. Diese Trennwände 101 sind radial verschieblich und sind, wenn sie durch ein Drehen des Schaufelrades entlang der Führung 99 geführt werden, konstant in Kontakt mit dieser. Durch die Trennwände 101, den inneren Radkörper 103 und die Führung 99 und durch nicht dargestellte Seitenabschlüsse sind einer Reihe von Kammern 69 gebildet. Die Führung 99 umschliesst nur einen Teil des Umfanges des Schaufelrades 97. An den anderen Stellen sind die Kammern 69 offen.

Durch eine nicht dargestellte Führungseinrichtung werden die Trennwände 101 während des Drehens des Schaufelrades 97 in radialer Richtung bewegt. An einer Stelle 105 des Radumfanges sind sie gänzlich in den inneren Radkörper 103 zurückgezogen. An dieser Stelle ist ein Abstreifer 107 vorhanden, der den Umfang des inneren Radkörpers 103 reinigt.

Im Betrieb wird ein Aromaträger in eine offene Kammer 69 eingefüllt. Bei fortschreitender Umdrehung des Schaufelrades 97 gelangt diese Aromaträger-Kleinmenge in die Führung 99. Da die Führung und das Schaufelrad nicht die selben Kreiszentren besitzen, verengt sich der Kammerquerschnitt mit dem Weiterdrehen des Schaufelrades 97. Dadurch wird der Aromaträger verdichtet. Eine Durchströmung des Aromaträgers mit Wasser kann von innen nach aussen, von aussen nach innen, oder parallel zur Drehachse des Schaufelrades erfolgen. Das Wasser kann auch einer Kammer drucklos zugeführt werden und durch Verkleinerung von deren Volumen durch eine Perforation in der Führung 99 hindurch wieder ausgepresst werden.

Auch bei dieser Vorrichtung ist gewährleistet, dass die einzelnen Oberflächen, welche verschmutzen können, durch relativ zu diesen bewegliche Teile abgestreift werden und dadurch gereinigt werden.

Ein gemeinsamer Vorteil all dieser Vorrichtungen ist, dass sie verhältnismässig wenig Platz beanspruchen. Dies ist auch darauf zurückzuführen, dass die notwendige Menge an Aromaträger nicht auf einmal, sondern sukzessive extrahiert wird.

Zusammenfassend kann gesagt werden: Bei einem Verfahren zur Herstellung eines trinkfertigen Getränkes durch Extraktion eines feststofflichen Aromaträgers 19 mittels Wasser wird der Aromaträger 19 sukzessive durch einen Extraktionsbereich 25 hindurch bewegt, die jeweils im Extraktionsbereich 25 vorliegende Teilmenge des für eine einzelne Genussmenge erforderlichen Aromaträgers 19 mit Wasser 31 durchsetzt, wobei das Wasser Aromastoffe aus dem Aromaträger aufnimmt, und anschliessend der Aromaträger 19 vom Extrakt 49 getrennt. Das Verfahren zeichnet sich dadurch aus, dass zudem der Aromaträger mit einer Fördereinrichtung 21,43,53,55;61,61';73;91;97 durch den Extraktionsbereich 25 hindurch zwangsgefördert wird. Eine Vorrichtung besitzt zur Zwangsförderung des Aromaträgers 19 beispielsweise eine Förderschnecke 73, zwei parallel verlaufende Förderbänder 61,61' oder ein Förderrad 97,91. Förderrad 97 und Förderbänder 61,61' sind mit Trennwänden 65, 101 ausgerüstet, welche in einer Förderbahn 22 verschieblich angeordnet sind und die Förderbahn 22 in Kammern 69 unterteilen.

## Patentansprüche

1. **Verfahren** zur Herstellung einer einzelnen Genussmenge eines trinkfertigen Getränkes durch Extraktion eines feststofflichen Aromaträgers (19) mittels Wasser (31), bei welchem Verfahren
a. der Aromaträger (19) sukzessive einem Extraktionsbereich (25) zugeführt wird,
b. der Aromaträger (19) durch den Extraktionsbereich (25) hindurch bewegt wird,
c. der sich durch den Extraktionsbereich (25) hindurch bewegende Aromaträger (19) mit Wasser (31) extrahiert wird, und
d. der Aromaträger (19) sukzessive vom Extrakt (49) getrennt wird,
**dadurch gekennzeichnet, dass**
e. während dem die Extraktion einer einzelnen Genussmenge erfolgt der Aromaträger (19) entlang eines Förderwegs durch den Extraktionsbereich (25) hindurch zwangsgefördert wird.

2. Verfahren nach Anspruch 1, **dadurch gekennzeichnet, dass** der Extrakt (49) entlang des Förderwegs bezüglich der Förderrichtung seitlich aus dem Aromaträger (19) hinausgeführt wird.

3. Verfahren nach Anspruch 1 oder 2, **dadurch gekennzeichnet, dass** der Aromaträger (19) einem sich entlang des Förderwegs verändernden, die Extraktion bestimmenden Parameter ausgesetzt wird.

4. Verfahren nach Anspruch 3, **dadurch gekennzeichnet, dass** der Aromaträger (19) an unterschiedlichen Stellen des Extraktionsbereichs (25) unterschiedlichen Druckverhältnissen ausgesetzt wird.

5. Verfahren nach einem der Ansprüche 3 oder 4, **dadurch gekennzeichnet, dass** der Aromaträger (19) an unterschiedlichen Stellen des Extraktionsbereichs (25) unterschiedlichen Temperaturen ausgesetzt wird.

6. Verfahren nach einem der Ansprüche 3 bis 5, **dadurch gekennzeichnet, dass** dem Aromaträger (19) an unterschiedlichen Stellen des Extraktionsbereichs (25) Wasser zugegeben und/oder Wasser entzogen wird.

7. Verfahren nach einem der Ansprüche 3 bis 6, **dadurch gekennzeichnet, dass** die Extraktion wenigstens zwei der nachgenannten Extraktionsstufen umfasst:
a. Lösen von wasserlöslichen Stoffen im Wasser (31),
b. Ausschwemmen von Feinpartikeln aus dem Aromaträger (19),
c. Auspressen von Ölen aus dem Aromaträger (19).

8. Verfahren nach einem der Ansprüche 3 bis 7, **dadurch gekennzeichnet, dass** für die Extraktion wenigstens zwei der nachgenannten Verfahrensstufen durchlaufen werden:
a. Benetzen des Aromaträgers (19) mit Wasser (31), und praktisch druckloses Trennen des Extraktes (49) vom Aromaträger (19),
b. Beaufschlagen des Aromaträgers (19) mit Druck und Auspressen von Extrakt (49) aus dem Aromaträger (19),
c. Durchströmen des Aromaträgers (19) mit Wasser unter einem dynamischen hydraulischen Druck von wenigstens 10x10⁵Pa,
d. Trockenpressen des Aromaträgers (19) mit einem Druck von über 20 x10⁵Pa.

9. Verfahren nach einem der Ansprüche 1 bis 8, **dadurch gekennzeichnet, dass**
a. der Aromaträger (19) als Schicht (23) ausgebreitet wird
b. und Teilbereiche der Schicht (23) sukzessive extrahiert werden.

10. Verfahren nach Anspruch 9, **dadurch gekennzeichnet, dass** die Schicht (23) in Kleinmengen unterteilt wird und die Kleinmengen in einer ununterbrochenen Reihe gefördert werden.

11. Verfahren nach Anspruch 10, **dadurch gekennzeichnet, dass** jede Kleinmenge einen Bruchteil einer für eine einzelne Genussmenge benötigten Menge des Aromaträgers (19) enthält.

12. Verfahren nach einem der Ansprüche 1 bis 11, **dadurch gekennzeichnet, dass** eine Mehrzahl diskreter Kleinmengen des Aromaträgers (19) gebildet wird, und in sukzessiver Folge mehrere Kleinmengen jeweils mit einem entsprechenden Bruchteil der bestimmten Wassermenge extrahiert werden.

13. Verfahren nach Anspruch 12, **dadurch gekennzeichnet, dass** die Genussmenge durch Unterbrechen des Verfahrens nach oder während der Extraktion einer Anzahl Kleinmengen gewählt wird.

14. Verfahren nach einem der Ansprüche 1 bis 13, **dadurch gekennzeichnet, dass** das Wasser (31) mit Druck durch den im Extraktionsbereich (25) vorliegenden Aromaträger (19) hindurchgetrieben wird.

15. Verfahren nach einem der vorangehenden Ansprüche, **dadurch gekennzeichnet, dass** der Aromaträger (19) kontinuierlich entlang des Förderwegs durch den Extraktionsbereich (25) gefördert wird.

16. Verfahren nach einem der Ansprüche 1 bis 15, **dadurch gekennzeichnet, dass** der Aromaträger (19) intermittierend entlang des Förderwegs durch den Extraktionsbereich (25) gefördert wird.

17. Verfahren nach einem der Ansprüche 1 bis 18, **dadurch gekennzeichnet, dass** Wasser (31) bezüglich der Förderrichtung des Aromaträgers (19) entlang des Förderwegs seitlich dem Aromaträger (19) zugeführt wird.

18. Verfahren nach den Ansprüchen 16 und 17, **dadurch gekennzeichnet, dass** das Wasser (31) quer zur Förderrichtung des Aromaträgers (19) durch den Aromaträger (19) hindurchströmt.

19. Verfahren nach einem der vorangehenden Ansprüche in Verbindung mit einem der Ansprüche 10 bis 12, **dadurch gekennzeichnet, dass** jeweils zwischen zwei Kleinmengen eine praktisch wasserdichte Dichtstelle (41) gebildet wird.

20. Verfahren nach einem der Ansprüche 1 bis 19, **dadurch gekennzeichnet, dass** der Aromaträger (19) während der Förderung des Aromaträgers (19) entlang des Förderwegs komprimiert wird.

21. **Vorrichtung** zur Herstellung einer einzelnen Genussmenge eines trinkfertigen Getränkes durch Extraktion eines feststofflichen Aromaträgers (19) mittels Wasser (31), mit
a. einer Förderbahn zur Aufnahme eines Aromaträgers (19)
b. einem Zuführungskanal (17) für den Aromaträger (19), welcher in die Förderbahn mündet,
c. einer Zuführungsleitung für das Wasser, welche in die Förderbahnmündet, und
d. einer Sieb-/Filtereinrichtung (21,45), um den extrahierten Aromaträger (19) vom Extrakt (49) zu trennen,
e. wobei die Förderbahn zwischen der Mündung der Zuführungsleitung für Wasser und der Sieb-/Filtereinrichtung einen Extraktionsbereich bildet, und
**dadurch gekennzeichnet,**
f. **dass** eine mechanische Fördereinrichtung (21,43,53,55;61,61';73;91;97) vorhanden ist, um den Aromaträger (19), während den die Extraktion einer einzelnen Genussmenge erfolgt, zwingend entlang der Förderbahn durch den Extraktionsbereich (25) hindurch zu fördern, und
g. **dass** der Extraktionsbereich derart dimensioniert ist, dass darin zu jedem Zeitpunkt lediglich ein Bruchteils einer zur Herstellung einer einzelnen Genussmenge des Getränks erforderlichen Menge an Aromaträger vorliegen kann.

22. Vorrichtung nach Anspruch 21, **dadurch gekennzeichnet, dass** die Sieb-/Filtereinrichtung (21,45) seitlich die Förderbahn in Längsrichtung begleitend angeordnet ist.

23. Vorrichtung nach Anspruch 21 oder 22, **dadurch gekennzeichnet, dass** an unterschiedlichen Stellen des Extraktionsbereichs (25) dieser unterschiedlich gestaltet ist und **dadurch** an unterschiedlichen Stellen ein die Herstellung des Getränks bestimmender Parameter unterschiedliche Werte aufweist.

24. Vorrichtung nach einem der Ansprüche 21 bis 23, **gekennzeichnet durch** eine Einrichtung (37), um das Wasser (31) mit Druck **durch** den Extraktionsbereich (25) zu pressen.

25. Vorrichtung nach einem der Ansprüche 21 bis 24, **dadurch gekennzeichnet, dass** die Fördereinrichtung (21,43,53,55; 61,61';73;91;97) Trennwände (besitzt, welche die Förderbahn in Kammern unterteilen.

26. Vorrichtung nach Anspruch 25, **dadurch gekennzeichnet, dass** die Kammern ein Volumen aufweisen, welches Volumen höchstens einem Bruchteil einer zur Herstellung einer Genussmenge des Getränkes erforderlichen Menge des Aromaträgers (19) Raum bietet.

27. Vorrichtung nach einem der Ansprüche 21 bis 26, **dadurch gekennzeichnet, dass** die Fördereinrichtung (21,43,53,55; 61,61';73;91;97) für eine kontinuierliche Förderung des Aromaträgers (19) ausgerüstet ist.

28. Vorrichtung nach einem der Ansprüche 21 bis 27, **dadurch gekennzeichnet, dass** die Fördereinrichtung (21,43,53,55; 61,61';73;91;97) für eine intermittierende Förderung des Aromaträgers (19) ausgerüstet ist.

29. Vorrichtung nach einem der Ansprüche 21 bis 28, **dadurch gekennzeichnet, dass** die Zuführungsleitung (33) seitlich in die Führungsbahn (22) mündet.

30. Vorrichtung nah Anspruch 29, **gekennzeichnet durch** eine Dichtstelle (41) auf der Förderbahn (22), welche Dichtstelle in Bezug auf die Förderrichtung des Aromaträgers (19) stromaufwärts der Mündung der Zuführungsleitung (33) liegt.

31. Vorrichtung nach Anspruch 30, **gekennzeichnet durch** eine zweite Dichtstelle (41') bezüglich der Förderrichtung des Aromaträgers (19) stromabwärts der ersten Dichtstelle (41), zwischen welchen Dichtstellen die Zuführungsleitung (33) in die Förderbahn (22) mündet und die Sieb-/Filtereinrichtung angeordnet ist.

32. Vorrichtung nach Anspruch 31, **dadurch gekennzeichnet, dass** die Fördereinrichtung (21,43,53,55; 61,61';73;91;97) Kammerwände (67,101) aufweist, zwischen welchen Kammerwänden innerhalb der Förderbahn (22) Kammern (69) gebildet sind, und dass diese Kammerwände wenigstens vor und nach dem Extraktionsbereich (25) die Kammern (69) gegeneinander weitgehend wasserdicht abdichten.

33. Vorrichtung nach einem der Ansprüche 21 bis 32, **dadurch gekennzeichnet, dass** die Förderbahn (22) eine im Querschnitt senkrecht zur Längsrichtung der Förderbahn verengte Stelle (z.B. 41, Fig. 10) aufweist, beim Durchgang durch welche Stelle ein Aromaträger (19) komprimiert wird.

34. Vorrichtung nach einem der Ansprüche 21 bis 33, **dadurch gekennzeichnet, dass** die Förderbahn (22) zwischen einem Wendel (75) einer Transportschnecke (73) ausgebildet ist oder mehrere Förderbahnen zwischen mehreren Wendeln einer Transportschnecke ausgebildet sind.

35. Vorrichtung nach Anspruch 34, **dadurch gekennzeichnet, dass** eine Raupe (81) vorhanden ist, welche in mehrfachem Eingriff mit dem Wendel (75) ist.

36. Vorrichtung nach Anspruch 34 oder 35, **dadurch gekennzeichnet, dass** die Transportschnecke mit einer zweiten Schnecke in Eingriff ist, so dass die Führungsbahn auf der ersten Transportschnecke (73) in eine Mehrzahl von Kammern unterteilt ist, welche sich beim Drehen der Schnecken in axialer Richtung der Schnecken verschieben.

37. Vorrichtung nach einem der Ansprüche 34 bis 36, **dadurch gekennzeichnet, dass** eine Dichtstelle (41) auf der Transportschnecke mit einem Zahnrad (85) gebildet ist, welches in Eingriff mit dem Wendel (75) der Transportschnecke (73) ist.

38. Vorrichtung nach einem der Ansprüche 21 bis 37, **dadurch gekennzeichnet, dass** eine Dichtstelle (41) gebildet ist durch eine Verengung des Querschnittes der Führungsbahn (22), wobei die Verengung derart bemessen ist, dass das Granulat an der Dichtstelle (41) derart stark komprimiert ist, dass die Führungsbahn (22) praktisch abgedichtet ist.

39. Vorrichtung nach einem der Ansprüche 21 bis 37, **dadurch gekennzeichnet, dass** die Führungsbahn (22) durch einen geradlinig verlaufenden oder gebogen verlaufenden Kanal (77, 95) gebildet ist, und die Fördereinrichtung (61,61';73;91;97) Kammerwände (67,101) aufweist, welche diesen Kanal in eine Mehrzahl von Kammern (69) unterteilen, und diese Kammerwände im Kanal mit einem Antrieb verschiebbar angeordnet sind.

40. Vorrichtung nach Anspruch 39, **dadurch gekennzeichnet, dass** die Kammerwände (67) an einem elastischen Band (61) ausgebildet sind, welche in einer Endlosschlaufe geführt ist.

41. Vorrichtung nach Anspruch 40, **dadurch gekennzeichnet, dass** zwei elastische Bänder (61.61') mit Trennwänden (65) ausgerüstet sind, die Bänder (61,61') einander gegenüberliegend angeordnet sind und in einem Bereich der Förderbahn (22) jeweils eine Trennwand (65) des einen Bandes (61) eine Trennwand (65') des anderen Bandes (61') berührt und die beiden Trennwände zusammen eine Kammerwand (67) bilden.

42. Vorrichtung nach Anspruch 41, **dadurch gekennzeichnet, dass** die Bänder (61,61') miteinander gekoppelt sind, so dass sie sich gleich rasch bewegen.

43. Vorrichtung nach einem der Ansprüche 21 bis 42, **dadurch gekennzeichnet, dass** die Fördereinrichtung (97) um eine Achse drehbar ist und radial zu dieser Achse stehende Kammerwände (101) aufweist.

44. Vorrichtung nach Anspruch 43, **dadurch gekennzeichnet, dass** die Kammerwände (101 in radialer Richtung beweglich sind.

## Claims

1. A method for the production of an individual consumption quantity of a ready-to-drink beverage by way of extraction of a solid-matter aroma carrier (19) by way of water (31), with which method
a. the aroma carrier (19) is successively supplied to an extraction region (25),
b. the aroma carrier (19) is moved through the extraction region (25),
c. the aroma carrier (19) moving through the extraction region (25) is extracted with water (31) and
d. the aroma carrier (19) is successively separated from the extract (49),
**characterised in that**
e. whilst the extraction of an individual consumption quantity is being effected, the aroma carrier (19) is forcibly conveyed along a conveyor route through the extraction region (25).

2. A method according to claim 1, **characterised in that** the extract (49) along the conveyor route, with respect to the conveyor direction, is led laterally out of the aroma carrier (19).

3. A method according to claim 1 or 2, **characterised in that** the aroma carrier (19) is subjected to a parameter which determines the extraction and which changes along the conveyor route.

4. A method according to claim 3, **characterised in that** the aroma carrier (19) is subjected to different pressure conditions at different locations of the extraction region (25).

5. A method according to one of the claims 3 or 4, **characterised in that** the aroma carrier (19) is subjected to different temperatures at different locations of the extraction region (25).

6. A method according to one of the claims 3 to 5, **characterised in that** water is added to and/or water is taken from the aroma carrier (19) at different locations of the extraction region (25).

7. A method according to one of the claims 3 to 6, **characterised in that** the extraction comprises at least two of the following specified extraction steps:
a. dissolving water-soluble substances in water (31),
b. flushing fine particles out of the aroma carrier (19),
c. pressing out oils from the aroma carrier (19).

8. A method according to one of the claims 3 to 7, **characterised in that** for the extraction, at least two of the following specified method steps are implemented:
a. subjecting the aroma carrier (19) to water (31), and practically pressure-less separation of the extract (49) from the aroma carrier (19),
b. impinging the aroma carrier (19) with pressure, and pressing extract (49) out of the aroma carrier (19),
c. flowing water through the aroma carrier (19) at a dynamic hydraulic pressure of at least 10x10⁵Pa,
d. pressing dry the aroma carrier (19) at a pressure of more than 20x10⁵ Pa.

9. A method according to one of the claims 1 to 8, **characterised in that**
a. the aroma carrier (19) is spread out as a layer (23)
b. and the part regions of the layer (23) are successively extracted.

10. A method according to claim 9, **characterised in that** the layer (23) is divided into small quantities, and the small quantities are conveyed in an uninterrupted row.

11. A method according to claim 10, **characterised in that** each small quantity contains a fraction of a quantity of the aroma carrier (19) required for an individual consumption quantity.

12. A method according to one of the claims 1 to 11, **characterised in that** a plurality of discrete small quantities of the aroma carrier (19) is formed, and several small quantities in each case with a corresponding fraction of the envisaged water quantity is extracted in a successive sequence.

13. A method according to claim 12, **characterised in that** the consumption quantity is selected after or during the extraction of a number of small quantities by way of interrupting the method.

14. A method according to one of the claims 1 to 13, **characterised in that** the water (31) is driven with pressure through the aroma carrier (19) present in the extraction region (25).

15. A method according to one of the preceding claims, **characterised in that** the aroma carrier (19) is continuously conveyed along the conveyor route through the extraction region (25).

16. A method according to one of the claims 1 to 15, **characterised in that** the aroma carrier (19) is conveyed along the conveyer route through the extraction region (25) in an intermittent manner.

17. A method according to one of the claims 1 to 18, **characterised in that** water (31), with respect to the conveyor direction of the aroma carrier (19), along the conveyor route, is supplied laterally to the aroma carrier (19).

18. A method according to one of the claims 16 and 17, **characterised in that** the water (31) flows through the aroma carrier (19) transversely to the conveyor direction of the aroma carrier (19).

19. A method according to one of the preceding claims, in combination with one of the claims 10 to 12, **characterised in that** a practically water-tight sealed location (41) is formed in each case between two small quantities.

20. A method according to one of the claims 1 to 19, **characterised in that** the aroma carrier (19) is compressed during the conveying of the aroma carrier (19) along the conveyor route.

21. A device for the production of an individual consumption quantity of a read-to-drink beverage by way of extraction of a solid-matter aroma carrier (19) by way of water (31), with
a. a conveyor path for accommodating an aroma carrier (19),
b. a supply channel (17) for the aroma carrier (19), which runs into the conveyor path,
c. a supply conduit for the water, which runs into the conveyor path, and
d. a sieve/filter device (21, 45), in order to separate the extracted aroma carrier (19) from the extract (49),
e. wherein the conveyor path between the run-in of the supply conduit for water, and the sieve/filter device, forms an extraction region, and
**characterised in**
f. **that** a mechanical conveyor device (21,43,53,55;61,61';73;91;97) is present, in order to, whilst the extraction of an individual consumption quantity is being effected, forcibly convey the aroma carrier (19) along the conveyor path through the extraction region (25), and
g. **that** the extraction region is dimensioned in a manner such that at any point in time, only a fraction of a quantity of aroma carrier necessary for production of an individual consumption quantity of the beverage may be present therein.

22. A device according to claim 21, **characterised in that** the sieve/filter device (21, 45) is arranged laterally accompanying the conveyor path in the longitudinal direction.

23. A device according to claim 21 or 22, **characterised in that** the extraction region (25) is designed in a different manner at different locations of this, and by way of this, at different locations, a parameter determining the production of the beverage has different values.

24. A device according to one of the claim 21 to 23, **characterised by** a device (37) in order to press water (31) with pressure through the extraction region (25).

25. A device according to one of the claims 21 to 24, **characterised in that** the conveyor device (21,43,53,55;61,61';73;91;97) comprises separating walls which divide the conveyor path into chambers.

26. A device according to claim 25, **characterised in that** the chambers have a volume, said volume having space at the most for a fraction of a quantity of aroma carrier (19) required for the production of a consumption quantity of the beverage.

27. A device according to one of the claims 21 to 26, **characterised in that** the conveyor device (21,43,53,55;61,61';73;91;97) is designed for a continuous conveying of the aroma carrier (19).

28. A device according to one of the claims 21 to 27, **characterised in that** the conveyor device (21,43,53,55;61,61';73;91;97) is designed for an intermittent conveying of the aroma carrier (19).

29. A device according to one of the claims 21 to 28, **characterised in that** the supply conduit (33) runs laterally into the guide path (22).

30. A device according to claim 29, **characterised by** a sealed location (41) on the conveyor path (22), said sealed location with respect to the conveyor direction of the aroma carrier (19), lying upstream of the run-in of the supply conduit (33).

31. A device according to claim 30, **characterised by** a second sealed location (41') downstream of the first sealed location (41) with respect to the conveyor direction of the aroma carrier (19), between which sealed locations, the supply conduit (33) runs into the conveyor path (22), and the sieve/filter device is arranged.

32. A device according to claim 31, **characterised in that** the conveyor device (21,43,53,55;61,61';73;91;97) comprises chamber walls (67,101), between which chamber walls chambers (69) are formed within the conveyor path (22), and that these chamber walls seal the chambers (69) to one another in a largely water-tight manner, at least in front of and after the extraction region (25).

33. A device according to one of the claims 21 to 32, **characterised in that** the conveyor path (22) has a location (e.g. 41, Fig. 10) which is narrowed in cross section perpendicular to the longitudinal direction of the conveyor path, and an aroma carrier (19) is compressed on passage through said location.

34. A device according to one of the claims 21 to 33, **characterised in that** the conveyor path (22) is formed between a spiral (75) of a transport worm (73), or several conveyor paths are formed between several spirals of a transport worm.

35. A device according to claim 34, **characterised in that** a crawler (81) is present which is in multiple engagement with the spiral (75).

36. A device according to claim 34 or 35, **characterised in that** the transport worm is in engagement with a second worm, so that the guide path on the first transport worm (73) is divided into a plurality of chambers, which displace in the axial direction of the worms on rotation of the worms.

37. A device according to one of the claims 34 to 36, **characterised in that** a sealed location (41) on the transport worm is formed with a toothed wheel (85) which is in engagement with the spiral (75) of the transport worm (73).

38. A device according to one of the claims 21 to 37, **characterised in that** a sealed location (41) is formed by a narrowing of the cross section of the guide path (22), wherein the narrowing is dimensioned in a manner such that the granulate at the sealed location (41) is compressed to such a great extent that the guide path (22) is practically sealed off.

39. A device according to one of the claims 21 to 37, **characterised in that** the guide path (22) is formed by a channel (77, 95) which runs in a straight line or which runs in an arcuate manner, and the conveyor device (61,61';73;91;97) comprises chamber walls (67, 101) which subdivide this channel into a plurality of chambers (69), and these chamber walls are displaceably arranged in the channel with a drive.

40. A device according to claim 39, **characterised in that** the chamber walls (67) are formed on an elastic belt (61) which is guided in an endless loop.

41. A device according to claim 40, **characterised in that** two elastic belts (61, 61') are provided with separating walls (65), the belts (61, 61') are arranged lying opposite one another, and in a region of the conveyor path (22), in each case one separating wall (65) of the one belt (61) contacts a separating wall (65') of the other belt (61'), and the two separating walls together form a chamber wall (67).

42. A device according to claim 41, **characterised in that** the belts (61, 61') are coupled to one another so that they move as equally rapidly.

43. A device according to one of the claims 21 to 42, **characterised in that** the conveyor device (97) is rotatable about an axis, and comprises chamber walls (101) standing radially to this axis.

44. A device according to claim 43, **characterised in that** the chamber walls (101) are movable in the radial direction.

## Revendications

1. Procédé pour la fabrication d'une quantité individuelle de dégustation d'une boisson prête à boire par l'extraction d'un support d'arôme solide (19) au moyen d'eau (31), procédé pour lequel
a. le support d'arôme (19) est amené successivement à une zone d'extraction (25),
b. le support d'arôme (19) est déplacé à travers la zone d'extraction (25),
c. le support d'arôme (19) qui traverse la zone d'extraction (25) est extrait avec de l'eau (31) et
c. le support d'arôme (19) est séparément successivement de l'extrait (49),
**caractérisé en ce que**
e. pendant que l'extraction d'une seule quantité de dégustation a lieu, le support d'arôme (19) est transporté de force le long d'un parcours de transport à travers la zone d'extraction (25).

2. Procédé selon la revendication 1, **caractérisé en ce que** l'extrait (49) est sorti latéralement du support d'arôme (19) le long du parcours de transport par rapport au sens de transport.

3. Procédé selon la revendication 1 ou 2, **caractérisé en ce que** le support d'arôme (19) est soumis à un paramètre, qui varie le long du parcours de transport, qui détermine l'extraction.

4. Procédé selon la revendication 3, **caractérisé en ce que** le support d'arôme (19) est soumis à différents endroits de la zone d'extraction (25) à différents rapports de pression.

5. Procédé selon l'une des revendications 3 ou 4, **caractérisé en ce que** le support d'arôme (19) est soumis à différents endroits de la zone d'extraction (25) à différentes températures.

6. Procédé selon l'une des revendications 3 à 5, **caractérisé en ce que** de l'eau est ajoutée au support-d'arôme (19) à différents endroits de la zone d'extraction (25) et/ou de l'eau en est extraite.

7. Procédé selon l'une des revendications 3 à 6, **caractérisé en ce que** l'extraction comprend au moins deux des étapes d'extraction suivantes :
a. dissolution des matières solides dans l'eau (31),
b. rinçage dans un courant d'eau de fines particules du support d'arôme (19),
c. pression d'huiles provenant du support d'arôme (19).

8. Procédé selon l'une des revendications 3 à 7, **caractérisé en ce que** pour l'extraction au moins deux des étapes de procédé suivantes sont effectuées :
a. humidification du support d'arôme (19) avec de l'eau (31) et séparation pratiquement sans pression de l'extrait (49) du support d'arôme (19),
b. chargement du support d'arôme (19) avec de la pression et expression de l'extrait (49) du support d'arôme (19),
c. passage d'eau à une pression hydraulique dynamique d'au moins 10x10⁵Pa à travers le support d'arôme (19),
d. pression à sec du support d'arôme (19) à une pression de plus de 20x10⁵Pa.

9. Procédé selon l'une des revendications 1 à 8, **caractérisé en ce que**
a. le support d'arôme (19) est étendu comme couche (23)
b. et des zones partielles de la couche (23) sont extraites successivement.

10. Procédé selon la revendication 9, **caractérisé en ce que** la couche (23) est divisée en petites quantités et les petites quantités sont transportées en une série ininterrompue.

11. Procédé selon la revendication 10, **caractérisé en ce que** chaque petite quantité contient une fraction d'une quantité du support d'arôme (19) qui est nécessaire pour une quantité individuelle de dégustation.

12. Procédé selon l'une des revendications 1 à 11, **caractérisé en ce qu'**une multitude de petites quantités discrètes du support d'arôme (19) est formée et que plusieurs petites quantités sont extraites en suite successive respectivement avec une fraction correspondante de la quantité d'eau déterminée.

13. Procédé selon la revendication 12, **caractérisé en ce que** la quantité de dégustation est sélectionnée par l'interruption du procédé après ou pendant l'extraction d'un nombre de petites quantités.

14. Procédé selon l'une des revendications 1 à 13, **caractérisé en ce que** l'eau (31) est forcée avec de la pression à traverser le support d'arôme qui est présent dans la zone d'extraction (25).

15. Procédé selon l'une des revendications précédentes, **caractérisé en ce que** le support d'arôme (19) est transporté à travers la zone d'extraction (25) en continu le long du parcours de transport.

16. Procédé selon l'une des revendications 1 à 15, **caractérisé en ce que** le support d'arôme (19) est transporté à travers la zone d'extraction (25) par intermittence le long du parcours de transport.

17. Procédé selon l'une des revendications 1 à 18, **caractérisé en ce que** de l'eau (31) est amenée sur le côté du support d'arôme (19) par rapport au sens de transport du support d'arôme (1) le long du parcours de transport.

18. Procédé selon les revendications 16 et 17, **caractérisé en ce que** de l'eau (31) traverse le support d'arôme (19) transversalement par rapport au sens de transport du support d'arôme (19).

19. Procédé selon l'une des revendications précédentes en relation avec l'une des revendications 10 à 12, **caractérisé en ce qu'**un endroit étanche (41) pratiquement étanche à l'eau est formé entre deux petites quantités.

20. Procédé selon l'une des revendications 1 à 19, **caractérisé en ce que** le support d'arôme (19) est comprimé pendant le transport du support d'arôme (19) le long du parcours de transport.

21. Dispositif pour la fabrication d'une quantité individuelle de dégustation d'une boisson prête à boire par l'extraction d'un support d'arôme solide (19) au moyen d'eau (31) avec
a. une voie de transport pour recevoir un support d'arôme (19)
b. un canal d'amenée (17) pour le support d'arôme (19) qui débouche dans la voie de transport,
c. une conduite d'amenée pour l'eau qui débouche dans la voie de transport et
d. un dispositif de tamis/filtre (21, 45) pour séparer le support d'arôme extrait (19) de l'extrait (49),
e. la voie de transport formant une zone d'extraction entre l'embouchure de la conduite d'amenée pour l'eau et le dispositif de tamis/filtre et
**caractérisé en ce**
f. **qu'**il existe un dispositif de transport mécanique (21, 43, 53, 55; 61, 61' ; 73 ; 91 ; 97) pour transporter le support d'arôme (19) de manière forcée le long de la voie de transport pendant que l'extraction d'une quantité individuelle de dégustation a lieu et
g. **que** la zone d'extraction est dimensionnée telle que seulement une fraction d'une quantité de support d'arôme nécessaire à la fabrication d'une quantité individuelle de dégustation de la boisson peut s'y trouver à tout moment.

22. Dispositif selon la revendication 21, **caractérisé en ce que** le dispositif de tamis/filtre (21, 45) est placé accompagnant latéralement la voie de transport dans le sens longitudinal.

23. Dispositif selon la revendication 21 ou 22, **caractérisé en ce que** la zone d'extraction (25) est configurée différemment à différents endroits de celle-ci et qu'un paramètre qui détermine la fabrication de la boisson présente différentes valeurs à différents endroits.

24. Dispositif selon l'une des revendications 21 à 23, **caractérisé par** un dispositif pour presser l'eau (31) avec de la pression à travers la zone d'extraction (25).

25. Dispositif selon l'une des revendications 21 à 24, **caractérisé en ce que** le dispositif de transport (21, 43, 53, 55 ; 61, 61' ; 73 ; 91; 97) possède des séparations qui divisent la voie de transport en chambres.

26. Dispositif selon la revendication 25, **caractérisé en ce que** les chambres présentent un volume qui offre de l'espace au plus à une fraction d'une quantité de support d'arôme (19) nécessaire à la fabrication d'une quantité de dégustation de la boisson.

27. Dispositif selon l'une des revendications 21 à 26, **caractérisé en ce que** le dispositif de transport (21, 43, 53, 55 ; 61, 61' ; 73 ; 91; 97) est équipé pour un transport continu du support d'arôme (19).

28. Dispositif selon l'une des revendications 21 à 27, **caractérisé en ce que** le dispositif de transport (21, 43, 53, 55 ; 61, 61' ; 73 ; 91; 97) est équipé pour un transport intermittent du support d'arôme (19).

29. Dispositif selon l'une des revendications 21 à 28, **caractérisé en ce que** la conduite d'amenée (33) débouche latéralement dans la voie de guidage (22).

30. Dispositif selon la revendication 29, **caractérisé par** un endroit étanche (41) sur la voie de transport (22), endroit étanche qui est situé par rapport au sens de transport du support d'arôme (19) en amont de l'embouchure de la conduite d'amenée (33).

31. Dispositif selon la revendication 30, **caractérisé par** un second endroit étanche (41') en aval du premier endroit étanche (41) par rapport au sens de transport du support d'arôme (19), endroits étanches entre lesquels débouche la conduite d'amenée (33) dans la voie de transport (22) et le dispositif de tamis/filtre est placé.

32. Dispositif selon la revendication 31, **caractérisé en ce que** le dispositif de transport (21, 43, 53, 55 ; 61, 61' ; 73 ; 91; 97) présente des parois de chambre (67, 101) entre lesquelles des chambres (69) sont formées à l'intérieur de la voie de transport (22) et que ces parois de chambre étanchent de manière pratiquement étanche à l'eau les chambres (69) les unes par rapport aux autres au moins avant et après la zone d'extraction (25).

33. Dispositif selon l'une des revendications 21 à 32, **caractérisé en ce que** la voie de transport (22) présente un endroit (par exemple 41, fig. 10) de section rétrécie perpendiculairement au sens longitudinal de la voie de transport, endroit lors de la traversée duquel un support d'arôme (19) est comprimé.

34. Dispositif selon l'une des revendications 21 à 33, **caractérisé en ce que** la voie de transport (22) est configurée entre une hélice (75) d'une vis de transport (73) ou que plusieurs voies de transport sont configurées entre plusieurs hélices d'une vis de transport.

35. Dispositif selon la revendication 34, **caractérisé en ce qu'**il existe une chenille (81) qui est en prise multiple avec l'hélice (75).

36. Dispositif selon la revendication 34 ou 35, **caractérisé en ce que** la vis de transport est en prise avec une seconde vis si bien que la voie de guidage sur la première vis de transport (73) est divisée en une multitude de chambres qui se déplacent dans le sens axial des vis lors de la rotation des vis.

37. Dispositif selon l'une des revendications 34 à 36, **caractérisé en ce qu'**un endroit étanche (41) est formé sur la vis de transport avec une roue dentée (85) qui est en prise avec l'hélice (75) de la vis de transport (73).

38. Dispositif selon l'une des revendications 21 à 37, **caractérisé en ce qu'**un endroit étanche (41) est formé par un rétrécissement de la section de la voie de guidage (22), le rétrécissement étant dimensionné tel que le granulé est comprimé à l'endroit étanche si fortement que la voie de guidage (22) est pratiquement étanchée.

39. Dispositif selon l'une des revendications 21 à 37, **caractérisé en ce que** la voie de guidage (22) est formée par un canal (77, 95) en ligne droite ou courbé et que le dispositif de transport (61, 61' ; 73 ; 91 ; 97) présente des parois de chambre (67, 101) qui divisent ce canal en une multitude de chambres (69) et que ces parois de chambre sont placées déplaçables dans le canal avec un entraînement.

40. Dispositif selon la revendication 39, **caractérisé en ce que** les parois de chambre (67) sont configurées sur une bande élastique (61) qui est guidée dans une boucle sans fin.

41. Dispositif selon la revendication 40, **caractérisé en ce que** deux bandes élastiques (61, 61') sont équipées de parois de séparation (65), les bandes (61, 61') sont placées l'une en face de l'autre et que respectivement une paroi de séparation (65) de l'une des bandes (61) touche, dans une zone de la voie de transport (22), une paroi de séparation de l'autre bande (61') et que les deux parois de séparation forment ensemble une paroi de la chambre (67).

42. Dispositif selon la revendication 41, **caractérisé en ce que** les bandes (61, 61') sont couplées l'une à l'autre si bien qu'elles se déplacent à la même vitesse.

43. Dispositif selon l'une des revendications 21 à 42, **caractérisé en ce que** le dispositif de transport (97) est rotatif autour d'un axe et présente des parois de chambre (101) placées radialement par rapport à cet axe.

44. Dispositif selon la revendication 43, **caractérisé en ce que** les parois de la chambre (101) sont mobiles dans le sens radial.
